Europäisches Patentamt

European Patent Office

Office européen des brevets

(19)

(11) Veröffentlichungsnummer: **0 145 700**
**B1**

(12) **EUROPÄISCHE PATENTSCHRIFT**

(45) Veröffentlichungstag der Patentschrift:
16.09.87

(21) Anmeldenummer: 84890202.9

(22) Anmeldetag: 30.10.84

(51) Int. Cl.⁴: **C 02 F 11/00,** C 02 F 11/18,
B 01 D 35/12, B 04 B 15/02

(54) Verfahren zum Herstellen von Hydrolysaten aus Abwasserschlämmen und organischen Stoffen bzw. Abfällen zur Gewinnung von biotechnologisch verwertbaren Substanzen sowie Vorrichtung zur Durchführung dieses Verfahrens.

(30) Priorität: 11.11.83 AT 3982/83

(43) Veröffentlichungstag der Anmeldung:
19.06.85 Patentblatt 85/25

(45) Bekanntmachung des Hinweises auf die Patenterteilung:
16.09.87 Patentblatt 87/38

(84) Benannte Vertragsstaaten:
CH DE FR GB IT LI SE

(56) Entgegenhaltungen:
DE - A - 1 432 874
FR - A - 1 029 374
FR - A - 2 383 132
GB - A - 22 251
GB - A - 909 872
GB - A - 1 525 451

(73) Patentinhaber: VOEST-ALPINE Aktiengesellschaft,
Friedrichstrasse 4, A-1011 Wien (AT)

(72) Erfinder: Janusch, Alois, Dipl.-Ing., Theodoraweg 1,
A-8706 Leoben (AT)
Erfinder: Hanke, Reinhart, Dipl.-Ing., Annaberggasse 2,
A-8700 Leoben (AT)

(74) Vertreter: Haffner, Thomas M., Dr. et al,
Patentanwaltskanzlei Dipl.-Ing. Adolf Kretschmer Dr.
Thomas M. Haffner Schottengasse 3a, A-1014 Wien (AT)

EP 0 145 700 B1

## Beschreibung

Die Erfindung bezieht sich auf ein Verfahren zum Herstellen von Hydrolysaten aus Abwasserschlämmen und organischen Stoffen bzw. Abfällen zur Gewinnung von biotechnologisch verwertbaren Substanzen, bei welchen die zu behandelnden Abwasserschlämme eingedickt bzw. entwässert werden, sowie eine Vorrichtung zur Durchführung dieses Verfahrens. Bei der Aufarbeitung von Abwasserschlämmen wurde bisher in der Regel eine weitgehende Trocknung versucht, so dass ein mehr oder minder wasserarmer Feststoff und eine Lösung für die weitere Verarbeitung zur Verfügung stehen. Der mehr oder minder wasserarme Feststoff wurde beispielsweise zur Bereitung von Kompost oder aber als Brennstoff verwendet. Die bei der Trocknung anfallende Wassermenge wurde in der Folge beispielsweise einer biologischen Aufarbeitung in Klärbecken oder einem oxidativen Abbau der organischen Substanzen unterworfen. Die biologische Aufarbeitung dieses aus der Trocknung der Abwasserschlämme erhaltenen Abwassers gestaltet sich insbesondere deshalb schwierig, da eine Vielzahl verschiedener organischer Substanzen in derartigen Abwasserschlämmen enthalten sein können, deren nutzbringende Aufarbeitung in der Regel mit herkömmlichen Verfahren nicht gelingt. Es konnten daher in der Regel keine selektiven Behandlungen des Abwassers, insbesondere von kommunalen Abwasserschlämmen, vorgenommen werden und es wurden eine Reihe von im Abwasser enthaltener verwertbarer Rohstoffe durch biologischen Abbau zerstört.

Aus der GB-A 1 525 451 ist es bekannt, Hydrolysate aus vorentwässerten Abwasserschlämmen herzustellen, um biotechnologische verwertbare Substanzen zu gewinnen, wobei eine Fraktionierung der Hydrolysate dadurch ermöglicht wird, dass die hydrolytische Spaltung in mindestens zwei aufeinanderfolgenden Stufen erfolgt.

Für die Herstellung von Hydrolysaten aus organische Substanzen enthaltenden Schlämmen ist es bekannt, Dampf in die Suspension derartiger organischer Substanzen einzuleiten, ein derartiges Verfahren ist beispielsweise in der FR-A-2 383 132 beschrieben. Die Ausbeute an möglichen Hydrolysaten aus den organischen Substanzen ist bei dieser Verfahrensweise gering und die Hydrolysate fallen in einer Mischung an, welche eine selektive Aufarbeitung nicht zulässt. Durch das Einleiten von Dampf in die Suspension derartiger organischer Feststoffe verlaufen bei der Herstellung von Hydrolysaten eine Reihe von Nebenreaktionen, welche zu schwer abbaubaren organischen Substanzen führen.

Die Erfindung zielt nun darauf ab, Abwässer und Abwasserschlämme in einer Weise zu hydrolysieren, dass eine Fraktionierung der Hydrolysate ermöglicht wird, so dass in der Folge die Möglichkeit geschaffen wird, die einzelnen getrennt anfallenden Hydrolysate einer selektiven Aufarbeitung zur Gewinnung von wertvollen Rohstoffen zu unterziehen. Zur Lösung dieser Aufgabe besteht das erfindungsgemässe Verfahren im wesentlichen darin, dass die eingedickten bzw. entwässerten Abwasserschlämme oder die organischen Stoffe bzw. Abfälle in wenigstens eine Siebtrommel eingebracht werden, dass die Siebtrommel und das eingebrachte Material unter Sattdampf oder Heissdampf bei 1 bis 40 bar, insbesondere 1 bis 15 bar, gesetzt und in der Dampfatmosphäre umgewälzt wird und dass das gewonnene Hydrolysat in in axialer Richtung der Siebtrommel(n) aufeinanderfolgenden Bereichen gesondert aufgefangen und abgeschleust wird. Siebtrommeln wurden im Zuge von Entwässerungsverfahren für wasserreiche Braunkohle bereits vorgeschlagen und ein derartiges Verfahren ist beispielsweise in der AT-PS 3 363 905 beschrieben. Bei diesem bekannten Verfahren diente die Einleitung von Sattdampf lediglich der Verbesserung des Trocknungsverfahrens und es wurde auf eine selektive Ableitung von Hydrolyseprodukten kein Augenmerk gelenkt. Auch die GB-A-22 251 beschreibt ein Verfahren, bei welchem vorentwässerte Abwasserschlämme in einer Siebtrommel unter Umwälzen mit Wasserdampf behandelt werden, wobei dieses bekannte Verfahren vor allem beabsichtigt, die Schlämme zu entwässern. Demgegenüber erlaubt die Verwendung einer Siebtrommel im Rahmen des erfindungsgemässen Verfahrens die Trennung von zeitlich aufeinanderfolgend entstehenden Hydrolyseprodukten. So werden die durch Einwirkung von Dampf zuerst gebildeten Hydrolyseprodukte aus den Abwasserschlämmen aus einer ersten Siebtrommel bzw. einem ersten Teilbereich einer Siebtrommel abgezogen, wohingegen die zeitlich später gebildeten Hydrolyseprodukte gesondert von diesen ersten Hydrolyseprodukten abgeleitet werden können. In einzelnen in Achsrichtung aufeinanderfolgenden Bereichen können im Rahmen des erfindungsgemässen Verfahrens mit Vorteil, Elutions- und/oder Hydrolysierhilfsmittel zugeführt werden, so dass eine selektive Bildung spezieller Hydrolysate unterstützt wird. Eine Behandlung des Einsatzgutes kann aber auch bereits vor dem Einbringen erfolgen. Innerhalb der gleichen Siebtrommel sind naturgemäss die Druckbedingungen konstant, so dass in aufeinanderfolgenden Bereichen der gleichen Siebtrommel lediglich zeitlich aufeinanderfolgend gebildete Hydrolysate gesondert abgeführt werden können.

Gemäss einer bevorzugten Ausgestaltung des erfindungsgemässen Verfahrens wird nun das Verfahren in aufeinanderfolgenden Siebtrommeln durchgeführt, in welchen der Dampfdruck stufenweise erhöht wird. Auf diese Weise lassen sich durch Variation des Sattdampfdruckes verschiedene Hydrolysate bilden und gesondert abführen und einer Weiterverwendung zuführen. Der Dampf kann hiebei durch Düsen über die axiale Länge der Siebtrommel verteilt in die Siebtrommel oberhalb derselben eingebracht werden, wodurch gleichzeitig der Vorteil erreicht wird, dass die Siebfläche der Trommeln durch die Beaufschlagung mit dem Dampfstrahl jeweils gereinigt wird. In der Trommel ergibt sich eine gute Durchmischung des eingebrachten Materials, sowie eine schnelle Hydrolysatabführung, so dass immer wieder neue reaktive Oberfläche dem Dampf dargeboten wird. Auf diese Weise lässt sich die Ausbeute an Hydrolysaten wesentlich erhöhen.

Gemeinsam mit den über die axiale Länge der Siebtrommel verteilt angeordneten Düsen für den Dampf kann ein Elutions- und/oder Hydrolysierhilfsmittel, insbesondere Natronlauge, schwefelsäure und/oder Phosphorsäure, aufgesprüht werden. Derartige Mittel können aber auch über gesonderte Düsen eingebracht werden, wobei die Teilbereiche, in welchen diese Hydrolysierhilfsmittel zur Wirkung gelangen, jeweils einer gesonderten Ableitung für das Hydrolysat entsprechen.

In vorteilhafter Weise wird das gegebenenfalls freiwerdende $CO_2$ kontinuierlich abgeführt, um den Wärmeübergang nicht zu beeinträchtigen. Die Drehzahl der Siebtrommel kann hiebei so gewählt werden, dass das Material lediglich umgewälzt wird oder einer leichten Zentripetalbeanspruchung unterworfen werden. Die Hydrolysate können über Wärmetauscher geführt werden und zur Vorwärmung des Einsatzgutes herangezogen werden. Zur Verdünnung zähflüssiger Hydrolysate kann Wasser in die Trommel(n) eingesprüht werden. Eine deutliche Trennung verschiedener Hydrolysate lässt sich dadurch erreichen, dass in einer Trommel mit Sattdampf und in einer weiteren Trommel mit Heissdampf gearbeitet wird.

Die erfindungsgemässe Vorrichtung zur Durchführung dieses Verfahrens ist im wesentlichen dadurch gekennzeichnet, dass wenigstens eine mit einem Drehantrieb versehene Siebtrommel in einem druckfesten und verschliessbaren Behälter angeordnet ist, dass oberhalb der Siebtrommeln Düsen längs des Mantels der Siebtrommel angeordnet sind und dass unterhalb jeder Siebtrommel in Achsrichtung derselben wenigstens zwei Auffangtassen mit gesonderten Abführungsleitungen angeordnet sind. Die mit dem Drehantrieb versehene Siebtrommel wird während des Betriebes in Umdrehung versetzt, so dass zum einen die wirksame Siebfläche des Mantels als Siebtrommel durch die Dampfzuführungsdüsen regelmässig gereinigt wird und zum andern das der Hydrolyse zu unterwerfende Material in regelmässigen Abständen gewendet wird. Unterhalb jeder Siebtrommel sind in Achsrichtung versetzt jeweils wenigstens zwei Auffangtassen für die gesonderte Abführung von zeitlich hintereinander anfallenden Hydrolysaten vorgesehen, wobei die Siebtrommel vorzugsweise mit einer Transportschnecke ausgebildet ist. Um innerhalb der Siebtrommel den erforderlichen Sattdampfdruck aufrechtzuerhalten sind am Aufgabeende und am Austragsende der Siebtrommel je eine Druckschleuse vorgesehen, wobei die Siebtrommel selbst naturgemäss in einem druckfesten und verschliessbaren Behälter angeordnet sein muss.

In bevorzugter Weise ist die Ausbildung so getroffen, die Siebtrommel(n) als Spaltsieb-Trommel(n) ausgebildet ist (sind), deren Spaltweite 0,1 - 1,5 mm, vorzugsweise 0,2 mm beträgt. Eine derartige Ausbildung erlaubt eine rasche Abführung des kondensierenden Wassers zusammen mit den Hydrolyseprodukten und damit eine rasche Erneuerung der für die Hydrolyse dargeboten Angriffsfläche des zu hydrolysierenden Ausgangsmaterials. In vorteilhafter Weise ist hiebei der Antrieb der Siebtrommel reversierbar, was insbesondere bei fasrigem Material den Vorteil ergibt, dass die Oberfläche der Siebtrommel durch Wenden der Antriebsrichtung leicht wieder frei gemacht werden kann.

Die gesondert aufgefangenen Hydrolysate enthalten biotechnologisch verwertbare Substrate, wie beispielsweise Kohlehydrate, Lipide und ähnliches je nach Ausgangszusammensetzung des Einsatzmaterials. Aufgrund der Dampfatmosphäre sind diese Hydrolysate bereits thermisch sterilisiert und können in der Folge durch eine dem gewünschten Produkt entsprechende Fermentation unter Einsatz auch von empfindlichen und hochspezialisierten Biozönosen weiterverarbeitet werden.

Der entwässerte Rückstand der behandelten Feststoffe nach der Hydrolyse kann in der Folge einer weiteren Trocknung zugeführt werden und beispielsweise als bodenverbessernde Mittel oder als Brennstoff eingesetzt werden.

Durch das erfindungsgemässe Verfahren wird die Verwertung fester organischer Rückstände aus verschiedenen Produktionszweigen, wie beispielsweise der Zucker-, Getränke-, Lebensmittel- oder Holzindustrie möglich, wobei die Aufarbeitung in besonders wirtschaftlicher Weise erfolgt. Durch die kontinuierliche thermische Hydrolyse können verwertbare organischen Substanzen, wie Zucker, Phenole, organische Säuren und andere gesondert voneinander gewonnen werden, wobei in der Folge durch entsprechende Raffination oder durch mikrobiologische Folgeprozesse eine nutzbare Aufarbeitung möglich ist.

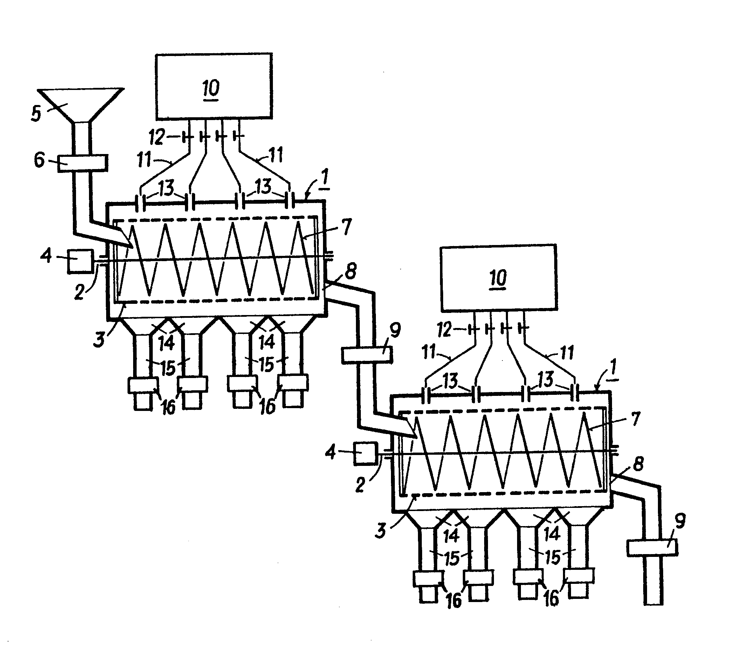

Die Erfindung wird nachfolgend anhand eines in der Zeichnung schematisch dargestellten Ausführungsbeispieles näher erläutert.

In der Zeichnung ist mit 1 ein Autoklav bezeichnet, in welchem eine um die Achse 2 rotierbar gelagerte Siebtrommel 3 enthalten ist. Der Drehantrieb ist mit 4 bezeichnet. Die Aufgabe des zu hydrolysierenden Materials erfolgt über den Aufgabetrichter 5 unter Zwischenschaltung einer Druckschleuse 6. Das Material gelangt in der Folge in das Innere der Siebtrommel 3 und wird durch die Förderschnecke 7 vom Aufgabeende zur Austragsöffnung 8 befördert, an welche wiederum eine Druckschleuse 9 angeschlossen ist.

Aus einer Dampferzeugung 10 gelangt über Leitungen 11, welche jeweils über gesonderte Absperrorgane 12 mit Sattdampf oder Heissdampf versorgt werden können, der für die Hydrolyse erforderliche Dampf zu Eintrittsdüsen 13 oberhalb der Siebtrommel 3. Der durch die Düsen unter Druck eingesprühte Dampfstrahl dient hiebei gleichzeitig der Reinigung der Siebfläche der Siebtrommel.

In Achsrichtung der Siebtrommel 3 nebeneinanderliegend sind gesonderte Auffangtrichter 14, an welche Ableitungen 15 angeschlossen sind, angeordnet. Die in den jeweiligen nebeneinander angeordneten Auffangtrichtern 14 gesammelten Hydrolysate entsprechen in zeitlicher Folge verschiedenen Hydrolysaten, welche über die gesonderten Leitungen 15 mit Druckschleusen 16 einer gesonderten Aufarbeitung zugeführt werden können. Innerhalb dieser ersten Siebtrommel 3 ist naturgemäss der Druck über die axiale Länge der Siebtrommel weitgehend konstant. Wenn unterschiedliche Hydrolysate durch Anwendung verschiedener Dampfdrucke erzielt werden sollen, wird eine zweite Siebtrommel 1 nachgeschaltet, welche unter Zwischenschaltung der Schleuse 9 an die erste Siebtrommel angeschlossen ist. Die der ersten Siebtrommel entsprechenden Bauteile dieser zweiten Siebtrommel sind mit den gleichen Bezugszeichen bezeichnet.

**Patentansprüche**

1. Verfahren zum Herstellen von Hydrolysaten aus Abwasserschlämmen und organischen Stoffen bzw. Abfällen zur Gewinnung von biotechnologisch verwertbaren Substanzen, bei welchem die zu behandelnden Abwasserschlämme eingedickt bzw. entwässet werden, dadurch gekennzeichnet, dass die eingedickten bzw. entwässerten Abwasserschlämme oder die organischen Stoffe bzw. Abfälle in wenigstens eine Siebtrommel (3) eingebracht werden, dass die Siebtrommel (3) und das eingebrachte Material unter Sattdampf oder Heissdampf bei 1 bis 40 bar, insbesondere 1 bis 15 bar, gesetzt und in der Dampfatmosphäre umgewälzt wird und dass das gewonnene Hydrolysat in in axialer Richtung der Siebtrommel(n) (3) aufeinanderfolgenden Bereichen gesondert aufgefangen und abgeleitet wird.

2. Verfahren nach Anspruch 1, dadurch gekennzeichnet, dass der Dampfdruck in aufeinanderfolgenden Siebtrommeln (3) stufenweise verändert wird.

3. Verfahren nach Anspruch 1 oder 2, dadurch gekennzeichnet, dass der Dampf durch Düsen (13) über die axiale Länge der Siebtrommeln (3) verteilt in die Siebtrommel(n) (3) oberhalb derselben eingebracht wird.

4. Verfahren nach Anspruch 1, 2 oder 3, dadurch gekennzeichnet, dass über die Düsen (13) für den Dampf oder von diesen gesonderte Düsen Elutions- und/oder Hydrolysierhilfsmittel, insbesondere NaOH, $H_2SO_4$ und/oder $H_3PO_4$, eingebracht werden.

5. Verfahren nach einem der Ansprüche 1 bis 4, dadurch gekennzeichnet, dass freiwerdendes $CO_2$ kontinuierlich abgeführt wird.

6. Verfahren nach einem der Ansprüche 1 bis 5, dadurch gekennzeichnet, dass die Verweilzeit des Materials in der Siebtrommel 1 - 60 min, vorzugsweise 1 - 30 min, beträgt.

7. Verfahren nach einem der Ansprüche 1 bis 5, dadurch gekennzeichnet, dass die Drehzahl der Siebtrommel (3) so gewählt wird, dass das Material nur umgewälzt wird.

8. Verfahren nach einem der Ansprüche 1 bis 5, dadurch gekennzeichnet, dass die Drehzahl der Trommel (3) so gewählt wird, dass das Material einer Zentripetalbeanspruchung grösser als 1 g ausgesetzt wird.

9. Verfahren nach einem der Ansprüche 1 bis 8, dadurch gekennzeichnet, dass mit dem Wärmeinhalt des Hydrolysates das Einsatzgut vorgewärmt wird.

10. Verfahren nach einem der Ansprüche 1 bis 9, dadurch gekennzeichnet, dass Wasser zur Verdünnung dickflüssiger Hydrolysate in die Siebtrommel (3) eingesprüht wird.

11. Verfahren nach einem der Ansprüche 1 bis 10, dadurch gekennzeichnet, dass in einer Trommel (3) Sattdampf und in einer weiteren Trommel (3) Heissdampf verwendet wird.

12. Vorrichtung zur Durchführung des Verfahrens nach einem der Ansprüche 1 bis 11, mit wenigstens einer mit einem Drehantrieb versehenen Siebtrommel (3) in einem druckfesten und verschliessbaren Behälter (1), wobei oberhalb der Siebtrommeln (3) Düsen (13) längs des Mantels der Siebtrommel angeordnet sind, dadurch gekennzeichnet, dass unterhalb jeder Siebtrommel (3) in Achsrichtung derselben wenigstens zwei Auffangtassen (14) mit gesonderten Abführungsleitungen angeordnet sind.

13. Vorrichtung nach Anspruch 12, dadurch gekennzeichnet, dass die Siebtrommel(n) (3) als Spalt-sieb-Trommel(n) ausgebildet ist (sind), deren Spaltweite 0,1 - 1,5 mm, vorzugsweise 0,2 mm beträgt.

14. Vorrichtung nach Anspruch 12 oder 13, dadurch gekennzeichnet, dass der Antrieb (4) der Siebtrommel in an sich bekannter Weise reversierbar ist.

15. Vorrichtung nach Anspruch 14, dadurch gekennzeichnet, dass innerhalb der Siebtrommel (3) eine Transportschnecke (7) angeordnet ist, deren Drehzahl grösser oder gleich der Trommeldrehzahl wählbar ist.

16. Vorrichtung nach einem der Ansprüche 12 bis 15, dadurch gekennzeichnet, dass am Aufgabeende und am Austragsende der Siebtrommel je eine Druckschleuse (6, 9) vorgesehen ist.


**Claims**

1. A process for producing hydrolysates from sewage sludge and organic substances or waste to obtain substances for use in biotechnology, wherein the sewage sludge to be treated is condensed or dehydrated, characterised in that the condensed or dehydrated sewage sludge or the organic substances or waste are loaded into a sieve drum (3) and the material placed therein is placed under saturated steam or superheated steam at 1 to 40 bar, more particularly 1 to 15 bar, and rolled in the steam atmosphere, and that the hydrolysate obtained is collected separately in zones which are disposed one behind another in the axial direction of the sieve drum(s) and drawn off.

2. A process according to claim 1, characterised in that the steam pressure is altered in successive sieve drums (3) in stages.

3. A process according to claim 1 or 2, characterised in that the steam is distributed via jets (13) along the axial length of the sieve drums into the sieve drum(s) (3) at the upper part thereof.

4. A process according to claim 1, 2 or 3, characterised in that auxiliary eluate and/or hydrolysing agents, more particularly NaOH, $H_2SO_4$ and/or $H_3PO_4$, are fed in via jets (13) for the steam or jets separated therefrom.

5. A process according to any one of claims 1 to 4, characterised in that nascent $CO_2$ is continuously drawn off.

6. A process according to any one of claims 1 to 5, characterised in that the period of dwell of the material in the sieve drum is 1-60 min, preferably 1-30 min.

7. A process according to any one of claims 1 to 5, characterised in that the speed of the drum (3) is selected so that the material is only rolled.

8. A process according to any one of claims 1 to 5, characterised in that the speed of the drum (3) is selected so that the material is subjected to a centripetal force of greater than 1 g.

9. A process according to any one of claims 1 to 8, characterised in that the charging material is preheated with the heat content of the hydrolysate.

10. A process according to any one of claims 1 to 9, characterised in that the water is sprayed into the drum (3) for thinning viscous hydrolysates.

11. A process according to any one of claims 1 to 10, characterised in that in one drum(3) saturated steam is used and in a further drum (3) superheated steam is used.

12. A device for carrying out the process according to any one of claims 1 to 11, with at least one sieve drum (3) provided with a rotary drive in a pressure tight and sealable container (1), jets (13) being arranged above the sieve drums (3) along the casing of the sieve drums, characterised in that below each sieve drum (3) in the axial direction thereof at least two collecting cups (14) with separate discharge lines are disposed.

13. A device according to claim 12, characterised in that the sieve drum(s) (3) is (are) designed as (a) slotted sieve drum(s), the slot width of which is 0.1 to 1.5 mm, preferably 0.2 mm.

14. A device according to claim 12 or 13, characterised in that the drive (4) of the sieve drum is reversible in a manner known <u>per se</u>.

15. A device according to claim 14, characterised in that inside the sieve drum (3) a screw conveyor (7) is arranged, the speed of which can be selected to be greater than or equal to the drum speed.

16. A device according to any one of claims 12 to 15, characterised in that at the input end and at the output end of the sieve drum a respective man lock (6, 9) is provided.

## Revendications

1. Procédé de production de matières hydrolysées à partir de boues d'eaux usées et de matières organiques ou de déchets pour obtenir des substances utilisables en bio technique dans lequel les boues d'eaux usées à traiter sont concentrées ou déshydratées, caractérisé en ce que les boues d'eaux usées ou les matières organiques ou déchets, concentrés ou déshydratés, sont introduits dans au moins un tamis en tambour (3) en ce que le tamis en tambour (3) et la matière introduite sont soumis à de la vapeur saturée ou de la vapeur chaude sous une pression comprise entre 1 et 40 bars, notamment entre 1 et 15 bars, et brassés dans l'atmosphère de vapeur et en ce que la matière hydrolysée obtenue est recuillie séparément dans des zones successives axiales du (des) tamis en tambour (3) et évacuée.

2. Procédé selon la revendication 1, caractérisé en ce que la pression de vapeur dans les tamis en tambour (3) successifs varie par paliers.

3. Procédé selon la revendication 1 ou 2, caractérisé en ce que la vapeur est introduite au-dessus du (des) tamis en tambour (3) par des buses (13) réparties sur la longueur axiale des tamis en tambour (3).

4. Procédé selon la revendication 1, 2 ou 3, caractérisé en ce que des agents d'élution et/ou d'hydrolyse, notamment NaOH, $H_2SO_4$ et/ou $H_3PO_4$, sont introduits par les buses (13) de vapeur ou par des buses particulières.

5. Procédé selon l'une des revendications 1 à 4, caractérisé en ce que le $CO_2$ dégagé est évacué en continu.

6. Procédé selon l'une des revendications 1 à 5, caractérisé en ce que la durée de séjour de la matière dans le tamis en tambour est comprise entre 1 et 60 min, de préférence entre 1 et 30 min.

7. Procédé selon l'une des revendications 1 à 5, caractérisé en ce que la vitesse de rotation du tamis en tambour (3) est choisie telle que la matière est simplement brassée.

8. Procédé selon l'une des revendications 1 à 5, caractérisé en ce que la vitesse de rotation du tambour (3) est choisie telle que la matière est soumise à une force centripète supérieure à 1 g.

9. Procédé selon l'une des revendications 1 à 8, caractérisé en ce que la matière à traiter est préchauffée avec la chaleur de la matière hydrolysée.

10. Procédé selon l'une des revendications 1 à 9, caractérisé en ce que de l'eau est vaporisée dans le tamis en tambour (3) pour diluer les matières hydrolysées épaisses.

11. Procédé selon l'une des revendications 1 à 10, caractérisé en ce que de la vapeur est saturée est introduite dans un tambour (3) et de la vapeur chaude dans un autre tambour (3).

12. Dispositif pour la mise en œuvre du procédé selon l'une des revendications 1 à 11, comportant au moins un tamis en tambour (3) pourvu d'une commande d'entraînement enfermé dans une enceinte (1) résistant à la pression et pouvant être fermée, et des buses (13) disposées au-dessus des tamis à tambour (3) le long de l'enveloppe de ceux-ci, caractérisé en ce que deux bars de réception (14) au moins comportant des conduites d'évacuation distinctes sont disposées au-dessous de chaque tamis en tambour (3) dans sa direction axiale.

13. Dispositif selon la revendication 12, caractérisé en ce que le (les) tamis en tambour (3) est (sont) un (des) tambour(s) à fentes dont la largeur est comprise entre 0,1 et 1,5 mm, et de préférence égale à 0,2 mm.

14. Dispositif selon la revendication 12 ou 13, caractérisé en ce que la commande (4) du tamis en tambour est réversible, de manière connue en soi.

15. Dispositif selon la revendication 14, caractérisé en ce qu'une vis de transport (7) est disposée à l'intérieur du tamis en tambour (3) dont la vitesse de rotation est supérieure ou égale à la vitesse de rotation du tambour.

16. Dispositif selon l'une des revendications 12 à 15, caractérisé en ce qu'une vanne de pression (6, 9) est prévue respectivement à l'extrémité de chargement et à l'extrémité d'évacuation du tamis en tambour.